Europäisches Patentamt

European Patent Office

Office européen des brevets

(19)

(11) Numéro de publication: **0 102 895 B2**

(12) **NOUVEAU FASCICULE DE BREVET EUROPEEN**

(45) Date de publication de nouveau fascicule du brevet:
05.07.95

(51) Int. Cl.6: **C08F 210/16**, C08F 2/34,
C08F 4/62

(21) Numéro de dépôt: 83401691.7

(22) Date de dépôt: 22.08.83

(54) Copolymérisation d'éthylène et d'hexène-1 en lit fluidisé.

(30) Priorité: **07.09.82 FR 8215162**

(43) Date de publication de la demande:
**14.03.84 Bulletin 84/11**

(45) Mention de la délivrance du brevet:
**29.01.86 Bulletin 86/05**

(45) Mention de la décision
concernant l'opposition:
**05.07.95 Bulletin 95/27**

(84) Etats contractants désignés:
**AT BE DE FR GB IT NL SE**

(56) Documents cités:
**EP-A- 0 011 308**
**DE-A- 2 803 598**
**DE-A- 2 933 997**
**FR-A- 2 439 797**
**GB-A- 2 093 047**

(73) Titulaire: **BP Chimie Société Anonyme
Tour Neptune - La Défense 1
20, place de Seine
F-92400 Courbevoie (FR)**

(72) Inventeur: **Morterol, Frédéric
22, avenue de la Durance
F-13117 Lavera (FR)**
Inventeur: **Vidal, Jean Louis
8, boulevard Gérard Philipe
F-13500 Martigues (FR)**

(74) Mandataire: **Patentanwälte Beetz - Timpe -
Siegfried Schmitt-Fumian - Mayr
Steinsdorfstrasse 10
D-80538 München (DE)**

EP 0 102 895 B2

## Description

La présente invention concerne un procédé de fabrication de copolymères d'éthylène et d'un hexène-1 de densité comprise entre 0,910 et 0,940, obtenus par copolymérisation en phase gazeuse, au moyen d'un lit fluidisé.

Il est déjà connu de fabriquer en solution dans un milieu d'hydrocarbure liquide des copolymères d'éthylène et d'une α-oléfine comportant plus de 5 atomes de carbone. Les procédés de ce type nécessitent la mise en oeuvre de solvants et comportent des opérations délicates de récupération du copolymère à partir de la solution. Par ailleurs, une partie non négligeable du copolymère reste dissoute dans le solvant, ce qui rend difficiles les opérations de récupération et de purification dudit solvant.

Il est également connu de fabriquer en phase gazeuse des copolymères d'éthylène et d'α-oléfines supérieures comportant plus de 5 atomes de carbone, ces copolymères ayant une densité comprise entre 0,900 et 0,940, la copolymérisation étant effectuée en présence d'un système catalytique comportant un catalyseur solide obtenu par broyage d'un composé du magnésium, tel que le chlorure de magnésium, et d'un composé de métal de transition. Compte tenu de sa large distribution granulométrique, un catalyseur de ce type ne peut pas être utilisé pour des polymérisations effectuées dans des réacteurs à lit fluidisé dans lesquels la vitesse de fluidisation est élevée, par exemple comprise entre 5 et 10 fois la vitesse minimum de fluidisation, sans provoquer d'entraînement important de particules hors du lit fluidisé.

Il a été également proposé un procédé de copolymérisation en phase gazeuse d'éthylène et d'α-oléfines supérieures comportant jusqu'à 6 atomes de carbone, au moyen d'un lit fluidisé et en présence d'un système catalytique comportant, comme catalyseur, un composé solide de magnésium, de titane et d'un halogène, obtenu par réaction de composés du titane tétravalent, avec un composé organomagnésien (ou de magnésium métal) et un halogénure d'alcoyle. Selon ce procédé, le copolymère en cours de formation dans le lit fluidisé se présente, en particulier lorsque l'α-oléfine supérieure utilisée comporte plus de 4 atomes de carbone, sous la forme d'une poudre constituée de particules collantes, favorisant la formation d'agglomérats préjudiciables au bon fonctionnement du lit fluidisé.

Il a maintenant été trouvé un procédé permettant d'éviter ces inconvénients et d'obtenir sans difficulté par copolymérisation en phase gazeuse au moyen d'un lit fluidisé des copolymères d'éthylène et d'hexène-1 ayant une densité comprise entre 0,910 et 0,940.

L'invention a donc pour objet un procédé d'obtention de tels copolymères par copolymérisation de l'éthylène et d'un hexène-1 en phase gazeuse au moyen d'un lit fluidisé, au contact d'un système catalytique constitué:

i. d'un cocatalyseur constitué d'un composé organométallique d'un métal des groupes II et III de la Classification périodique des éléments;

ii. d'un catalyseur supporté, le support étant essentiellement un chlorure de magnésium ayant des propriétés spécifiques et le catalyseur comprenant un dérivé d'un métal appartenant aux groupes IV, V et VI de la Classification périodique des éléments, notamment un composé de titane, connu pour ses propriétés catalytiques dans la polymérisation de l'éthylène et des α-oléfines.

Selon l'invention, le support du catalyseur est constitué de particules à base essentiellement de chlorure de magnésium, qui présentent les caractéristiques suivantes:

- les particules ont une forme sphéroïdale définie par le fait que, si D et d sont les grand et petit axes de ces particules, $D/d \leq 1,3$;

- les particules ont un diamètre moyen en masse réglable à volonté et compris entre 10 et 100 $\mu$ environ;

- la distribution granulométrique de ces particules est telle que le rapport Dm/Dn, du diamètre moyen en masse, Dm, au diamètre moyen en nombre, Dn, est inférieur ou égal à 3, par exemple compris entre 1,1 et 2,5; plus particulièrement, la distribution granulométrique de ces particules est très étroite et telle que le rapport Dm/Dn est compris entre 1,1 et 1,5; on note en outre l'absence pratiquement totale de particules de diamètre supérieur à $2 \times Dm$ ou inférieur à $0,2 \times Dm$; la distribution granulométrique peut, également, être telle que plus de 90% en poids des particules d'un même lot sont compris dans la fourchette Dm ± 10%;

- les particules peuvent présenter une surface légèrement bosselée telle que celle d'une framboise, mais de préférence une surface très lisse;

- la surface spécifique des particules est comprise entre environ 20 et 60 $m^2/g$ (BET);

- la densité des particules est comprise entre environ 1,6 et 2,2;

- les particules sont constituées essentiellement de chlorure de magnésium et éventuellement d'un chlorure d'aluminium; de préférence elles peuvent contenir, en faible proportion, des produits à liaison Mg-C, de sorte que le rapport atomique Cl/(Mg + 3/2 Al) est légèrement inférieur à 2; elles peuvent contenir en outre un composé donneur d'électrons.

Les supports ainsi définis peuvent notamment être préparés en faisant réagir un composé organomagnésien avec un composé organique chloré, en présence d'un composé donneur d'électrons. Comme composé organomagnésien, on peut choisir soit un produit de formule $R_1MgR_2$, soit un complexe d'addition de formule $R_1MgR_2, xAl(R_3)_3$, formules dans lesquelles $R_1$, $R_2$ et $R_3$ sont des radicaux alcoyle identiques ou différents ayant de 2 à 12 atomes de carbone et x est compris entre 0,001 et 10, de préférence compris entre 0,01 et 2. Comme composé organique chloré, on choisit un chlorure d'alcoyle de formule $R_4Cl$ dans laquelle $R_4$ est un radical alcoyle secondaire ou de préférence tertiaire ayant de 3 à 12 atomes de carbone. Le composé donneur d'électrons utilisé est un composé organique qui comprend au moins un atome d'oxygène, de soufre, d'azote et/ou de phosphore. Il peut être choisi parmi une grande variété de produits tels que les amines, les amides, les phosphines, les sulfoxydes, les sulfones ou les éthers. Comme composé donneur d'électrons, on peut choisir notamment un éther aliphatique de formule $R_5OR_6$, dans laquelle $R_5$ et $R_6$ sont des radicaux alcoyle identiques ou différents ayant de 1 à 12 atomes de carbone.

De plus, les divers réactifs mis en jeu pour la préparation des supports tels que définis précédemment doivent être utilisés dans les conditions suivantes:

- le rapport molaire $R_4Cl/R_1MgR_2$ est compris entre 1,5 et 2,5 et de préférence compris entre 1,85 et 1,95;
- le rapport molaire $R_4Cl/R_1MgR_2, xAl(R_3)_3$ est compris entre 1,5 (1 + 3/2 • x) et 2,5 (1 + 3/2 • x), et de préférence entre 1,85 (1 + 3/2 • x) et 1,95 (1 + 3/2 • x);
- le rapport molaire entre le composé donneur d'électrons et le composé organomagnésien ($R_1MgR_2$ ou $R_1MgR_2, xAl(R_3)_3$) est compris entre 0,01 et 2, et de préférence compris entre 0,01 et 1;
- la réaction entre le composé organomagnésien et le composé organique chloré a lieu sous agitation, au sein d'un hydrocarbure liquide, à une température comprise entre 5 et 80°C, et en particulier entre 35 et 80°C.

La préparation des catalyseurs à partir des supports ainsi définis est réalisée par précipitation, sur lesdits supports, d'un dérivé d'un métal de transition des groupes IV, V et VI de la Classification périodique des éléments, connu pour ses proprié-tés catalytiques vis-à-vis de la polymérisation et de la copolymérisation de l'éthylène et des $\alpha$-oléfines, en particulier d'un composé du titane dont la valence est inférieure à 4. Cette précipitation peut être réalisée selon des procédés connus, mais est avantageusement effectuée selon le procédé ci-après:
- la réaction de réduction d'un composé du titane à sa valence maximum, de formule $Ti(OR_7)_{4-n}X_n$, dans laquelle $R_7$ est un groupement alcoyle contenant de 2 à 6 atomes de carbone, X est un atome de chlore ou de brome et n est un nombre entier ou fractionnaire tel que $1 \leq n \leq 4$, est effectuée au moyen d'un agent réducteur choisi parmi des composés organomagnésiens de formule $R_8MgR_9$, dans laquelle $R_8$ et $R_9$ sont des groupements alcoyle identiques ou différents contenant de 2 à 12 atomes de carbone, des composés organozinciques de formule $Zn(R_{10})_{(2-y)}X_y$, dans laquelle $R_{10}$ est un groupement alcoyle ayant de 2 à 12 atomes de carbone, X est le chlore ou le brome et y est un nombre entier ou fractionnaire tel que $0 \leq y \leq 1$, et des composés organoaluminiques de formule $Al(R_{11})_{(3-x)}X_x$, dans laquelle $R_{11}$ est un groupement alcoyle ayant 2 à 12 atomes de carbone, X est le chlore ou le brome et x est un nombre entier ou fractionnaire tel que $0 \leq x \leq 2$;
- ladite réaction de réduction est réalisée en présence ou non d'un composé donneur d'électrons choisi parmi une grande variété de composés organiques comprenant au moins un atome d'oxygène, de soufre, d'azote et/ou de phosphore, tels que, par exemple, les amines, les amides, les phosphines, les sulfoxydes, les sulfones ou les éthers; comme composé donneur d'électrons, on peut choisir en particulier un éther aliphatique de formule $R_{12}OR_{13}$, dans laquelle $R_{12}$ et $R_{13}$ sont des groupements alcoyle identiques ou différents, ayant de 1 à 12 atomes de carbone;
- les quantités relatives molaires des divers composés (support, composé du titane, organomagnésien et/ou organozincique et/ou organoaluminique, donneur d'électrons ou éther-oxyde) sont, en rapports molaires, telles que:
- support/composé du titane compris entre 1 et 50, et de préférence compris entre 2,5 et 10;
- composé organomagnésien et/ou organozincique et/ou organoaluminique/composé du titane compris entre 0,1 et 3, de préférence compris entre 0,5 et 1,5;
- composé donneur d'électrons ou éther-oxyde/composé du titane compris entre 0 et 5, et de préférence compris entre 0,1 et 1,5.

La précipitation est effectuée à une température comprise entre -30 et 100°C, sous agitation, au sein d'un milieu d'hydrocarbure liquide.

La mise en oeuvre des réactifs dans cette précipitation peut être réalisée de diverses façons.

On peut, par exemple, introduire progressivement l'agent réducteur (composé organomagnésien ou organozincique ou organoaluminique), dans un milieu hydrocarbure liquide, contenant le support de chlorure de magnésium et le composé du titane. Il est également possible d'introduire progressivement et simultanément l'agent réducteur et le composé du titane dans le milieu d'hydrocarbure liquide contenant le support de chlorure de magnésium. Toutefois, il est généralement préférable d'introduire progressivement le composé du titane dans le milieu d'hydrocarbure liquide contenant le support de chlorure de magnésium et l'agent réducteur.

Les catalyseurs obtenus selon la présente invention se présentent sous la forme d'une poudre, de couleur généralement brun-rouge, constituée de particules dont les propriétés physiques telles que la forme sphéroïdale, l'aspect de surface, le diamètre moyen en masse et la distribution granulométrique définie par le rapport Dm/Dn, sont sensiblement identiques à celles des particules du support de chlorure de magnésium dont elles sont issues.

Après évaporation du milieu d'hydrocarbure liquide dans lequel ils ont été préparés, les catalyseurs selon l'invention sont utilisés pour la copolymérisation de l'éthylène et d'hexène-1, en employant des techniques connues de polymérisation en phase gazeuse au moyen d'un lit fluidisé.

La copolymérisation est effectuée en utilisant comme cocatalyseur un composé organométallique d'un métal des groupes II et III de la Classification périodique, de préférence un composé organoaluminique ou halogéno-organoaluminique. Les constituants du système catalytique doivent être mis en oeuvre en proportions telles que le rapport atomique de la quantité de métal des groupes II et III du cocatalyseur à la quantité de métal de transition des groupes IV, V et VI du catalyseur est compris entre 0,5 et 200, de préférence compris entre 1 et 50.

Les systèmes catalytiques utilisés peuvent être mise en oeuvre en l'état ou après avoir subi une opération de prépolymérisation. Cette opération de prépolymérisation qui conduit à des particules dont les dimensions et formes sont sensiblement homothétiques de celles du catalyseur de départ, consiste à mettre en contact le catalyseur et le cocatalyseur avec de l'éthylène éventuellement en mélange avec une α-oléfine telle qu'un hexène-1; la prépolymérisation peut avantageusement être réalisée en deux étapes comme décrit ci-après. Les produits catalytiques ainsi obtenus conviennent particulièrement à la copolymérisation de l'éthylène et d'un hexène-1 en lit fluidisé: ces produits possèdent des dimensions, une résistance à l'abrasion et une réactivité adaptables à ce mode de copolymérisation, permettant d'obtenir une poudre non collante, exempte en particulier de copolymères de bas point de fusion ayant à la fois une masse moléculaire faible et une teneur relativement élevée en hexène-1.

Le début de la réaction de prépolymérisation (ou le premier stade de cette réaction lorsque l'on opère en deux étapes distinctes) est nécessairement réalisé en suspension dans un milieu liquide inerte.

Cette première étape de prépolymérisation se poursuit jusqu'à ce que chaque particule de catalyseur comporte de 0,1 à 10 g de polyéthylène ou de copolymère de l'éthylène par milliatome-gramme de métal de transition présent dans le catalyseur. La prépolymérisation peut ensuite se poursuivre soit en suspension dans un milieu d'hydrocarbure liquide, soit à sec; en général elle peut être poursuivie - tout en conservant au catalyseur une activité convenable - jusqu'à obtention de 10 à 500 g de polyéthylène ou de copolymère de l'éthylène par milliatome-gramme de métal de transition présent dans le catalyseur.

Le prépolymère, obtenu selon ce procédé, se présente sous la forme d'une poudre constituée de particules ayant un diamètre moyen en masse compris généralement entre 80 et 300 $\mu$, de préférence compris entre 100 et 240 $\mu$, et une distribution granulométrique telle que le rapport Dm/Dn est inférieur ou égal à 3, de préférence compris entre 1,1 et 2,5; la poudre de prépolymère ne contient pratiquement pas de particules de diamètre supérieur à $2 \times$ Dm ni inférieur à $0,2 \times$ Dm.

La copolymérisation en phase gazeuse, au moyen d'un lit fluidisé, peut être réalisée selon les techniques courantes de polymérisation et de copolymérisation en lit fluidisé. Toutefois, le mélange gazeux assurant la fluidisation comporte, outre les monomères, éthylène et hexène-1, à polymériser, un gaz inerte tel que l'azote, le méthane ou l'éthane et de l'hydrogène pour assurer le réglage des poids moléculaires des copolymères obtenus. La présence d'un gaz inerte dans ce mélange gazeux améliore sensiblement l'élimination de la chaleur de la réaction et modifie favorablement la cinétique de la copolymérisation. La vitesse de fluidisation dans le réacteur à lit fluidisé peut être suffisamment élevée pour assurer l'homogénéisation du lit fluidisé et pour éliminer efficacement la chaleur dégagée par la copolymérisation, sans avoir recours à aucun autre moyen d'homogénéisation, notamment mécanique. La vitesse de fluidisation est, de préférence, égale à 5 à 10 fois la vitesse minimum de fluidisation, c'est-à-dire généralement comprise entre environ 40 et 80 cm/s. En traversant le lit fluidisé, une partie seulement de l'éthylène et de l'hexène-1 se polymérise au contact des particules de copolymères en cours de croissance. Le mélange gazeux contenant la fraction d'éthylène et d'hexène-1 qui n'a pas réagi sort du lit fluidisé et passe à travers un système de refroidissement, destiné à éliminer la chaleur produite au cours de la réaction, avant d'être recyclée dans le réacteur à lit fluidisé, au moyen d'un compresseur.

La copolymérisation doit être réalisée à une température comprise entre environ 50 et 90°C, de préférence comprise entre 70 et 90°C, sous une pression totale pouvant varier entre les limites généralement comprises entre 0,5 et 4 MPa.

Les pressions partielles (pp) des différents constituants du mélange gazeux utilisé pour assurer la fluidisation doivent respecter les relations suivantes:

0,05 MPa ≤ pp hexène-1 ≤ 0,15 MPa
0,15 ≤ pp hexène-1/pp éthylène ≤ 0,5
0,05 ≤ pp hydrogène/pp éthylène ≤ 0,5
0,2 ≤ pp gaz inerte/pression totale ≤ 0,9

Comme hexène-1 on utilise de préférence un hexène-1 ayant un point d'ébullition relativement bas tel que le méthyl-4-pentène-1.

Lorsque l'on opère selon le procédé tel que décrit ci-dessus et que l'on utilise en particulier le méthyl-4-pentène-1 comme l'hexène-1, on obtient des copolymères contenant environ de 4 à 15% en poids de motifs dérivés de méthyl-4-pentène-1 et ayant des densités comprises entre 0,910 et 0,940.

Ces copolymères se présentent directement à l'issue de la copolymérisation en lit fluidisé sous la forme de poudres constituées de particules non collantes, présentant une proportion négligeable de copolymères de bas point de fusion ayant à la fois une masse moléculaire faible et une teneur relativement élevée en hexène-1.

Ces poudres de copolymères, faciles à manipuler, ont une masse volumique apparente relativement élevée, comprise entre 0,30 et 0,45 g/cm³, de préférence comprise entre 0,35 et 0,45 g/cm³.

Les particules de copolymère constituant ces poudres ont une forme sphéroïdale, définie par le fait que, si D et d sont respectivement le grand et le petit axe de ces particules, D/d ≤ 1,3. Ces particules ont un diamètre moyen en masse, Dm, compris entre 300 et 1500 $\mu$, de préférence compris entre 500 et 1200 $\mu$. La distribution granulométrique de ces particules est telle que le rapport Dm/Dn est inférieur ou égal à 3,5, de préférence compris entre 1,2 et 3. La largeur de la distribution granulométrique de cette poudre, qui constitue le lit fluidisé, dépend non seulement de celle du prépolymère utilisé, mais aussi du temps de séjour moyen du copolymère dans le réacteur à lit fluidisé ainsi que de la vitesse avec laquelle le système catalytique perd son activité au cours de la réaction de copolymérisation. Il est en particulier avantageux dans un tel procédé d'utiliser un système catalytique qui perd relativement rapidement son activité au cours de la réaction de copolymérisation, afin d'obtenir une poudre ayant la distribution granulométrique la plus étroite possible. Ces copolymères d'éthylène et de méthyl-4-pentène-1 se caractérisent également par un taux d'insaturation très faible, inférieur à 0,2 double liaison éthylénique par 1000 atomes de carbone, ce qui leur confère une excellente stabilité.

Par analyse calorimétrique différentielle à balayage, après recuit à 200°C, refroidissement à la vitesse de 16°C par minute, et chauffage à la vitesse de 16°C par minute, ces copolymères présentent un point de fusion unique à une température comprise entre 116 et 128°C, le diagramme de fusion présentant de façon caractéristique un seul pic à cette température, ce qui correspond à une répartition particulière des dimensions des cristallites.

La structure des copolymères se caractérise en outre par un très faible taux de branchements longs (g*), ce qui se traduit par une valeur g* = $(\eta)$-/$(\eta_1)$ ≥ 0,90, $(\eta)$ étant la viscosité intrinsèque d'un copolymère donné et $(\eta_1)$ étant la viscosité intrinsèque d'un polyéthylène linéaire ayant la même masse moléculaire moyenne en poids que celle dudit copolymère.

Ces copolymères dont l'indice de fluidité sous 2,16 kg et à 190°C, selon la norme ASTM D 1238, peut varier entre 0,1 et 30 g par 10 min, trouvent des applications particulièrement intéressantes dans la fabrication de films de haute résistance mécanique.

*Méthode de détermination des diamètres moyens en masse (Dm) et en nombre (Dn) de particules (support, catalyseur prépolymère, polymère)*

Selon l'invention, les diamètres moyens en masse (Dm) et en nombre (Dn) des particules de support, de catalyseur, de prépolymère ou de polymère sont mesurés à partir d'observations microscopiques, au moyen de l'analyseur d'images Optomax (Micro-Measurements Ltd - Grande-Bretagne). Le principe de la mesure consiste à obtenir à partir de l'étude expérimentale par microscopie optique d'une population de particules une table d'effectifs où est donné le nombre $(n_i)$ de particules appartenant à chaque classe (i) de diamètres, chaque classe (i) étant caractérisée par un diamètre intermédiaire $(d_i)$, compris entre les limites de ladite classe. Suivant la norme française homologuée NF X 11-630 de juin 1981, Dm et Dn sont fournis par les formules suivantes :

- diamètre moyen en masse :

$$Dm = \frac{\Sigma\, ni\, (di)^3\, di}{\Sigma\, ni\, (di)^3}$$

- diamètre moyen en nombre :

$$Dn = \frac{\Sigma\, ni \cdot di}{\Sigma\, ni}$$

Le rapport Dm/Dn caractérise la distribution granulométrique; il est parfois appelé «largeur de distribution granulométrique».

La mesure par l'analyseur d'images Optomax est réalisée au moyen d'un microscope inversé qui permet l'examen des suspensions de particules avec un grossissement compris entre 16 et 200 fois. Une caméra de télévision reprend les images données par le microscope inversé et les transmet à un ordinateur qui analyse les images ligne par ligne et point par point sur chaque ligne, en vue de déterminer les dimensions ou diamètres des particules, puis de les classer.

Les exemples non limitatifs suivants illustrent l'invention.

*Exemple 1:*

a) *Fabrication du catalyseur*

*Préparation du support*

Dans un réacteur de 5 l en acier inoxydable, muni d'un système d'agitation tournant à 750 tr/min et contenant 800 ml de n-hexane, on introduit à la température ambiante (20°C) et sous couverture d'azote: 1725 ml d'une solution de butyloctylmagnésium dans l'heptane contenant 1500 millimole de magnésium et 61 ml (300 mmol) d'éther-diisoamylique (DIA). Le réacteur est alors chauffé à 50°C et on y verse goutte à goutte, en 3 h, 313 ml de chlorure de tertiobutyle (soit 2850 mmol). A la fin de cette addition, on maintient la suspension à 50°C pendant 3 h et, ensuite, on lave cinq fois le précipité A obtenu avec du n-hexane. Le produit A lavé constitue le support; sa composition chimique est la suivante par mole de magnésium:
- 1,97 mole de chlore;
- 0,03 équivalent-gramme de liaison Mg-C;
- 0,02 mole d'éther-diisoamylique.

A l'examen microscopique on a pu déterminer que le support de chlorure de magnésium se présente sous la forme d'une poudre constituée de particules sphéroïdiques (le rapport moyen entre grand et petit axes, D/d, des particules est égal à 1,2), ayant une distribution granulométrique étroite, définie par le rapport Dm/Dn égal à 1,2, avec Dm = 33 μ; on trouve en outre que plus de 90% en poids des particules ont un diamètre moyen compris entre 30 et 36 μ. La densité du produit est égale à 1,9 et sa surface spécifique à 38 m²/g; la surface des particules est lisse.

*Préparation du catalyseur*

Dans 3000 ml de suspension dans le n-hexane du produit A lavé obtenu ci-dessus, contenant 1450 mmol de MgCl₂, on ajoute sous agitation 82 ml d'éther-diisoamylique et 400 ml d'une solution 1,2 molaire dans le n-hexane (soit 480 mmol) de chlorure de diéthylaluminium. Le réacteur est porté à 50°C et on y verse goutte à goutte en 2 h 650 ml d'une solution 0,6 molaire dans le n-hexane (soit 390 mmol) de dichlorure de di-n-propoxytitane. A la fin de cette addition, on porte la température à 80°C et on la maintient à cette valeur pendant 2 h. Le produit solide est ensuite lavé cinq fois avec du n-hexane pour donner le catalyseur B prêt à l'emploi. L'analyse du catalyseur montre qu'il contient par atome-gramme de titane total:
- 0,06 mole de titane tétravalent;
- 0,94 mole de titane trivalent;
- 3,85 mole de magnésium;
- 9,87 mole de chlore;
- 0,20 mole d'aluminium, et
- 0,11 mole d'éther-diisoamylique (DIA).

C'est une poudre de couleur brune, composée de particules de forme sensiblement sphérique, ayant une distribution granulométrique étroite à l'image du support utilisé et en particulier telle que plus de 90% en poids des particules ont un diamètre moyen compris entre 32 et 38 μ, avec Dm = 35 μ; on trouve, en outre, que le rapport Dm/Dn des particules de catalyseur est égal à 1,3; la surface des particules est lisse.

b) *Fabrication du prépolymère*

Dans un réacteur de 5 l en acier inoxydable, muni d'un système d'agitation tournant à 750 tr/min, on introduit sous azote 2 l de n-heptane que l'on chauffe à 70°C. On introduit ensuite 48 ml d'une solution à 1 mol par litre de tri-n-octylaluminium (TnOA) et une quantité du catalyseur B préparé ci-dessus en a), contenant 12 milliatome-grammes de titane.

On introduit alors dans le réacteur de l'hydrogène correspondant à une pression partielle égale à 0,08 MPa, puis de l'éthylène suivant un débit de 160 g/h pendant 3 h. A la fin de la réaction, on transvase le tout dans un évaporateur rotatif sous vide; on obtient ainsi 480 g d'une poudre sèche de prépolymère C, contenant par gramme 0,025 milliatome de titane. Cette poudre est constituée de particules sphéroïdiques ayant une distribution granulométrique telle que le rapport Dm/Dn = 1,3, avec Dm = 140 $\mu$; la surface des particules est lisse.

c) *Copolymérisation en lit fluidisé*

Dans un réacteur à lit fluidisé en acier inoxydable, de 15 cm de diamètre, fonctionnant avec un mélange gazeux ascendant, animé d'une vitesse de 40 cm/s, contenant en pourcentage molaire 5% d'hydrogène, 8% de méthyl-4-pentène-1, 22% d'éthylène et 65% d'azote, sous une pression totale de 1 MPa et une température maintenue à 80°C, on introduit tout d'abord 3200 g d'une poudre de polyéthylène parfaitement anhydre et desséchée à titre de poudre de charge, puis d'une manière séquencée 2,2 g de prépolymère C préparé ci-dessus en b) toutes les 10 min.

En soutirant du réacteur 640 g de poudre par heure, le niveau du lit fluidisé reste constant. Après 10 h de fonctionnement, la poudre de charge est pratiquement totalement éliminée et on obtient une poudre de copolymère dont les caractéristiques sont les suivantes:

- particules sensiblement sphériques, ayant un diamètre moyen en masse égal à 510 $\mu$;
- distribution granulométrique étroite, telle que le rapport Dm/Dn = 1,7;
- masse volumique apparente de la poudre: 0,40 g/cm$^3$;
- densité du copolymère: 0,920;
- indice de fluidité mesuré à 190°C sous charge de 2,16 kg (suivant norme ASTM D 1238): 1 g/10 min;
- teneur en motifs dérivés du méthyl-4-pentène-1 : 9% en poids;
- teneur en titane: 25 ppm;
- taux d'insaturation : 0,1 double liaison éthylénique pour 1000 atomes de carbone;
- point de fusion unique à 124°C, déterminé par analyse calorimétrique différentielle à balayage après recuit à 200°C, refroidissement à la vitesse de 16°C par minute et chauffage à la vitesse de 16°C par minute;
- taux de branchements longs: g* = 0,90.

Exemple 2:

On utilise comme support A une poudre à base de chlorure de magnésium, constituée de particules sphéroïdiques ayant une distribution granulométrique étroite, telle que Dm/Dn = 2,3, avec Dm = 23 $\mu$; cette poudre contient moins de 0,05% en poids de particules de diamètre inférieur à 4 $\mu$; elle présente une densité égale à 1,9 et une surface spécifique égale à 46 m$^2$/g (BET); la surface des particules est lisse.

a) *Fabrication du catalyseur*

Elle est identique à celle de l'exemple 1a. L'analyse du catalyseur B obtenu donne par atomegramme de titane total:

- 0,94 mole de titane trivalent;
- 0,06 mole de titane tétravalent;
- 3,80 mole de magnésium;
- 9,85 mole de chlore;
- 0,16 mole d'aluminium, et
- 0,08 mole d'éther diisoamylique.

Le catalyseur B est une poudre brune composée de particules sphéroïdiques, ayant une distribution granulométrique telle que Dm/Dn = 2,4, avec Dm = 23 $\mu$; les particules de catalyseur ont une surface aussi lisse que le support initial.

b) *Fabrication du prépolymère*

Elle est identique à celle de l'exemple 1b, excepté le fait qu'au lieu d'introduire dans le réacteur de l'éthylène suivant un débit de 160 g/h, on introduit un mélange d'éthylène et de méthyl-4-pentène-1 contenant 3,5% en poids de méthyl-4-pentène-1, suivant un débit de 160 g/h. On obtient 480 g d'une poudre de prépolymère C ayant une densité de 0,94 et contenant par gramme 0,025 milliatome-gramme de titane. Cette poudre est constituée de particules sphéroïdiques ayant une distribution granulométrique telle que le rapport Dm/Dn = 2,4, avec Dm = 100 $\mu$; la surface des particules est lisse.

c) *Copolymérisation en lit fluidisé*

Elle est identique à celle de l'exemple 1c, excepté le fait qu'au lieu d'utiliser un mélange gazeux contenant en pourcentage molaire 5% d'hydrogène, 8% de méthyl-4-pentène-1, 22% d'éthylène et 65% d'azote, on utilise un mélange gazeux contenant 5% d'hydrogène, 7% de méthyl-4-pentène-1, 23% d'éthylène et 65% d'azote en pourcentage molaire. On soutire du réacteur 680 g de poudre par heure, tout en maintenant le lit fluidisé à une hauteur constante. Après 10 h de réaction en continu, on obtient une poudre de copolymère dont les caractéristiques sont les suivantes:

- particules de forme sphéroïdale, ayant un diamètre moyen en masse égal à 370 $\mu$;
- distribution granulométrique telle que le rapport Dm/Dn = 2,8;
- masse volumique apparente de la poudre: 0,42 g/cm$^3$;
- densité du copolymère: 0,925;

- indice de fluidité, mesuré à 190°C sous une charge de 2,16kg: 0,9 g/10 min.
- teneur en motifs dérivés du méthyl-4-pentène-1 : 8% en poids;
- teneur en titane: 23 ppm;
- taux d'insaturation: 0,13 double liaison éthylénique pour 1000 atomes de carbone;
- point de fusion unique à 120°C, déterminé par analyse calorimétrique différentielle à balayage, après recuit à 200°C, refroidissement à la vitesse de 16°C par minute et chauffage à la vitesse de 16°C par minute;
- taux de branchements longs: g* = 0,97.

## Exemple 3:

On utilise comme support A une poudre à base de chlorure de magnésium, constituée de particules sphéroïdiques ayant une distribution granulométrique étroite, telle que le rapport Dm/Dn = 1,1, avec Dm = 52 $\mu$; on trouve que plus de 90% en poids des particules ont un diamètre moyen compris entre 47 et 57 $\mu$; la densité du produit est égale à 1,9 et sa surface spécifique à 38 m²/g (BET); la surface des particules est lisse.

### a) Fabrication du catalyseur

Elle est identique à celle de l'exemple 1a. L'analyse du catalyseur B obtenu donne par atomegramme de titane total:
- 0,95 mole de titane trivalent;
- 0,05 mole de titane tétravalent;
- 3,80 mole de magnésium;
- 9,95 mole de chlore,
- 0,20 d'aluminium, et
- 0,11 mole d'éther diisoamylique.

Le catalyseur B est une poudre brune composée de particules sphéroïdiques, ayant une distribution granulométrique telle que Dm/Dn = 1,2, avec Dm = 55 $\mu$; les particules de catalyseur ont une surface lisse.

### b) Fabrication du prépolymère Prépolymérisation (première étape)

Dans un réacteur de 5 l en acier inoxydable, muni d'un système d'agitation tournant à 750 tr/min et contenant 2 l de n-hexane chauffé à 50°C, on introduit sous couverture d'azote 100 mmol de tri-n-octylaluminium (TnOA) et une suspension du catalyseur B dans l'hexane contenant 500 millimole de titane. Le réacteur est chauffé à 60°C et l'éthylène y est introduit à un débit constant et égal à 167 g/h, pendant 3 h. A la fin de la réaction on transvase le tout dans un évaporateur rotatif sous vide; on obtient ainsi 820 g de poudre sèche C' d'un prépolymère de couleur brun clair, composée de particules d'un diamètre moyen en masse égal à 66 $\mu$ et de distribution granulométrique étroite, telle que le rapport Dm/Dn = 1,2. La poudre C' est conservée sous azote.

## Prépolymérisation (deuxième étape)

Dans un réacteur à lit fluidisé de 15 cm de diamètre fonctionnant avec une vitesse de gaz de 10 cm/s, sous des pressions partielles de 0,8 MPa d'azote, 0,1 MPa d'hydrogène, 0,02 MPa de méthyl-4-pentène-1 et 0,08 MPa d'éthylène, on introduit toutes les 6 min 11 g de la poudre C' et en continu 25 g/h de TnOA pur, dans la moitié inférieure du lit maintenu à 70°C. Au soutirage séquencé, on recueille environ 4 kg/h d'une poudre légèrement teintée en beige qui contient par gramme 0,017 milliatome-gramme de titane, pour un temps de séjour de 0,5 h dans le réacteur, et qui présente une distribution granulométrique telle que le rapport Dm/Dn = 1,3, avec Dm = 260 $\mu$ et une densité de 0,93.

### c) Copolymérisation en lit fluidisé

Elle est identique à celle de l'exemple 1c, excepté le fait qu'au lieu d'utiliser le mélange gazeux animé d'une vitesse de 40 cm/s, on l'utilise avec une vitesse de 60 cm/s. On soutire du réacteur 650 g de poudre par heure, tout en maintenant le lit fluidisé à une hauteur constante. Après 10 h de réaction en continu, on obtient une poudre de copolymère dont les caractéristiques sont les suivantes:
- particules de forme sphéroïdale, ayant un diamètre moyen en masse égal à 950 $\mu$;
- distribution granulométrique telle que le rapport Dm/Dn = 1,5;
- masse volumique apparente de la poudre: 0,41 g/cm³;
- densité du copolymère: 0,919;
- indice de fluidité, mesuré à 190°C sous une charge de 2,16 kg: 1 g/10 min;
- teneur en motifs dérivés du méthyl-4-pentène-1 : 9% en poids;
- teneur en titane: 16 ppm;
- taux d'insaturation: 0,15 double liaison éthylénique pour 1000 atomes de carbone;
- point de fusion unique à 118°C, déterminé par analyse calorimétrique différentielle à balayage, après recuit à 200°C, refroidissement à la vitesse de 16°C par minute et chauffage à la vitesse de 16°C par minute;
- taux de branchements longs: g* = 0,95.

*Méthode de détermination du taux de branchements longs, g\**

Dans la formule g* = $(\eta)/(\eta_1)$, la viscosité intrinsèque $(\eta)$ du copolymère est mesurée dans le trichlorobenzène à 135°C. De son côté, la viscosité intrinsèque $(\eta_1)$ du polyéthylène linéaire, ayant la même masse moléculaire moyenne en poids, Mw, que ledit copolymère est calculée selon l'équation suivante du type Mark-Houwink: $(\eta_1)$ = $6,02 \times 10^{-4} \times (Mw)^{0,69}$; la masse moléculaire moyenne en poids, Mw, du copolymère est déterminée par chromatographie par perméation sur gel (GPC), les colonnes de fractionnement étant étalonnées à l'aide d'échantillons de polyéthylène linéaire.

**Revendications**

1. Procédé de préparation de copolymères d'éthylène et d'un hexène-1 ayant une densité comprise entre 0,910 et 0,940, comportant une copolymérisation d'éthylène et d'hexène-1 à l'état gazeux en mélange avec un gaz inerte tel que l'azote, le méthane, ou l'éthane, et avec de l'hydrogène, le mélange gazeux circulant de bas en haut à travers un lit fluidisé du copolymère en cours de formation, la copolymérisation étant effectuée à une température comprise entre 50 et 90°C, en présence d'un système catalytique comprenant d'une part un cocatalyseur constitué par au moins un composé organométallique d'un metal des groupes II et III de la Classification périodique des éléments et d'autre part un catalyseur comportant un support à base essentiellement de chlorure de magnésium et éventuellement d'un chlorure d'aluminium, constitué de particules de forme sphéroïdale, ayant un diamètre moyen en masse compris entre 10 et 100 $\mu$ et présentant une distribution granulométrique telle que le rapport Dm/Dn du diamètre moyen en masse, Dm, au diamètre moyen en nombre, Dn, des particules est inférieur ou égal à 3; support sur, lequel a été réalisée la précipitation d'un dérivé d'un métal de transition des groupes IV, V et VI de la Classification périodique des éléments, connu pour ses propriétés catalytiques vis-à-vis de la polymérisation et de la copolymérisation des $\alpha$-oléfines, les pressions partielles (pp) des divers constituants du mélange gazeux étant telles que:

    0,05 MPa ≦ pp hexène-1 ≦ 0,15 MPa
    0,15 ≦ pp hexène-1/pp éthylène ≦ 0,5
    0,05 ≦ pp hydrogène/pp éthylène ≦ 0,5
    0,2 ≦ pp gaz inerte/pression totale ≦ 0,9.

2. Procédé selon la revendication 1, caractérisé en ce que la copolymérisation est réalisée à une température comprise entre 70 et 90°C.

3. Procédé selon la revendication 1, caractérisé en ce que le composé organométallique de métal des groupes II et III est un composé organoaluminique ou halogéno-organoaluminique.

4. Procédé selon la revendication 1, caractérisé en ce que le support présente une distribution granulométrique telle que le rapport Dm/Dn est compris entre 1,1 et 2,5.

5. Procédé selon la revendication 1, caractérisé en ce que le support présente une distribution granulométrique telle que le rapport Dm/Dn est compris entre 1,1 et 1,5.

6. Procédé selon la revendication 1, caractérisé en ce que le support présente une distribution granulométrique telle que plus de 90% en poids des particules sont compris dans la fourchette Dm ± 10%.

7. Procédé selon la revendication 1, caractérisé en ce que le support contient des produits comportant au moins une liaison Mg-C et un composé donneur d'électrons, et en ce que sa densité est comprise entre 1,6 et 2,2.

8. Procédé selon la revendication 1, caractérisé en ce que le support présente une surface spécifique comprise entre 20 et 60 $m^2/g$ (BET), et, de préférence, une surface lisse.

9. Procédé selon la revendication 1, caractérisé en ce que le dérivé de métal de transition est un composé du titane.

10. Procédé selon la revendication 9, dans lequel la précipitation du composé du titane sur le support a été réalisée par réduction d'un composé du titane à sa valence maximum de formule $Ti(OR_7)_{4-n}X_n$ dans laquelle $R_7$ est un groupement alcoyle contenant de 2 à 6 atomes de carbone, X est un atome de chlore ou de brome et n est un nombre entier ou fractionnaire tel que $1 \leq n \leq 4$, à l'aide d'un agent réducteur choisi parmi les composés organomagnésiens de formule $R_8MgR_9$ dans laquelle $R_8$ et $R_9$ sont des groupements alcoyle contenant de 2 à 12 atomes de carbone, les composés organozinciques de formule $Zn(R_{10})_{(2-y)}X_y$ dans laquelle $R_{10}$ est un groupement alcoyle ayant de 2 à 12 atomes de carbone, X est le chlore ou le brome et y un nombre entier ou fractionnaire tel que $0 \leq y \leq 1$, et les composés organoaluminiques de formule $Al(R_{11})$-

$_{(3-x)}X_x$ dans laquelle $R_{11}$ est un groupement alcoyle ayant de 2 à 12 atomes de carbone, X est le chlore ou le brome et x est un nombre entier ou fractionnaire tel que $0 \leq x \leq 2$,

- ladite réduction pouvant être réalisée en présence d'un composé donneur d'électro choisi parmi les composés organiques comprenant au moins un atome d'oxygène, de soufre, d'azote et/ou de phosphore;
- les quantités relatives molaires des divers composés (support de chlorure de magnésium et éventuellement de chlorure d'aluminium, composé du titane, organomagnésien et/ou organozincique et/ou organoaluminique, donneur d'électrons) étant telles que:
- support/composé du titane compris entre 1 et 50, de préférence compris entre 2,5 et 10;
- organomagnésien et/ou organozincique et/ou organoaluminique/composé du titane compris entre 0,1 et 3, de préférence entre 0,5 et 1,5;
- composé donneur d'électrons/composé du titane compris entre 0 et 5, de préférence entre 0,1 et 1,5.

11. Procédé selon la revendication 10, dans lequel la réduction est réalisée en présence d'un éther aliphatique de formule $R_{12}OR_{13}$ dans laquelle $R_{12}$ et $R_{13}$, identiques ou différents, sont choisis parmi les groupements alcoyle ayant de 1 à 12 atomes de carbone,

- les quantités relatives molaires des divers composés (support de chlorure de magnésium et éventuellement de chlorure d'aluminium, composé du titane, organomagnésien et/ou organozincique et/ou organoaluminique, éther) étant telles que:
- support/composé du titane compris entre 1 et 50, de préférence compris entre 2,5 et 10;
- organomagnésien et/ou organozincique et/ou organoaluminique/composé du titane compris entre 0,1 et 3, de préférence entre 0,5 et 1,5;
- éther composé du titane compris entre 0 et 5, de préférence entre 0,5 et 1,5.

12. Procédé selon la revendication 1, caractérisé en ce que la copolymérisation est effectuée en présence d'un système catalytique dans lequel le rapport atomique de la quantité de métal des groupes II et III du cocatalyseur à la quantité de métal de transition des groupes IV, V et VI du catalyseur est compris entre 1 et 50.

13. Procédé selon la revendication 1, caractérisé en ce que avant de réaliser ladite copolymérisation, le catalyseur est soumis à une prépolymérisation de l'éthylène ou une précopolymérisation de l'éthylène et d'une $\alpha$-oléfine de façon à obtenir de 0,1 à 500 g de polymère ou de copolymère par millimole de métal de transition.

14. Procédé selon la revendication 1, caractérisé en ce que les conditions de copolymérisation en lit fluidisé sont telles que les particules de prépolymère et de copolymère en cours de formation sont maintenues à l'état fluidisé uniquement au moyen d'un courant gazeux ascendant contenant l'éthylène et l'hexène-1 à polymériser et ayant une vitesse comprise entre 40 et 80 cm/s.

15. Copolymères de l'éthylène et du méthyl-4-pentène-1 sous forme d'une poudre, pouvant être obtenus selon le procédé selon la revendication 1 en utilisant le méthyl-4-pentène-1 en tant que hexène-1 et ayant les propriétés suivantes:

- poudre constituée de particules ayant un diamètre moyen en masse, Dm, compris entre 300 et 1500 $\mu$m et une distribution granulométrique telle que le rapport Dm/Dn est inférieur ou égal à 3,5;
- teneur en motifs dérivés du méthyl-4-pentène-1 comprise entre 4 et 15 % en poids;
- densité comprise entre 0,910 et 0,940;
- masse volumique apparente comprise entre 0,35 et 0,45 g/cm$^3$;
- taux d'insaturation inférieur à 0,2 double liaison éthylénique par 1000 atomes de carbone;
- point de fusion unique, compris entre 116 et 128 °C, déterminé par analyse calorimétrique différentielle à balayage après recuit à 200 °C, refroidissement à une vitesse de 16 °C par minute et chauffage à une vitesse de 16 °C par minute;
- structure à faible taux de branchements longs telle que $g^* \geq 0,90$,

$$g^* = \frac{[\eta]}{[\eta_1]},$$

$[\eta]$ étant la viscosité intrinsèque du copolymère et $[\eta_1]$ étant la viscosité intrinsèque d'un polyéthylène linéaire ayant la même masse moléculaire moyenne en poids que le copolymère.

16. Copolymères selon la revendication 15, caractérisés en ce qu'ils se présentent sous forme de particules sphéroidiques avec une distribution granulométrique telle que le rapport Dm/Dn est compris entre 1,2 et 3.

## Claims

1. Process for the preparation of copolymers of ethylene and of a 1-hexene having a density of between 0.910 and 0.940 comprising a copolymerization of ethylene and of 1-hexene in the gaseous state, as a mixture with an inert gas, such as nitrogen, methane or ethane, and with hydrogen, the gas mixture moving from the bottom upwards through a fluidized bed of the copolymer which is being formed, the copolymerization being carried out at a temperature of between 50 and 90°C, in the presence of a catalytic system comprising, on the one hand, a cocatalyst composed of at least one organometallic compound of a metal from groups II and III of the periodic classification of the elements and, on the other hand, a catalyst comprising a support based essentially on magnesium chloride and optionally on an aluminium chloride, composed of particles of spheroidal shape, having a mass-average diameter of between 10 and 100 $\mu$ and having a particle size distribution such that the ratio Dm/Dn of the mass-average diameter, Dm, to the number-average diameter, Dn, of the particles is less than or equal to 3, on which support the precipitation has been carried out of a derivative of a transition metal from groups IV, V and VI of the periodic classification of the elements which is known for its catalytic properties with respect to the polymerization and the copolymerization of $\alpha$-olefins, the partial pressures (pp) of the various constituents of the gas mixture being such that:
0.05 MPa $\leq$ 1-hexene pp $\leq$ 0.15 MPa
0.15 $\leq$ 1-hexene pp/ethylene pp $\leq$ 0.5
0.05 $\leq$ hydrogen pp/ethylene pp $\leq$ 0.5
0.2 $\leq$ inert gas pp/total pressure $\leq$ 0.9.

2. Process according to Claim 1, characterized in that the copolymerization is carried out at a temperature of between 70 and 90°C.

3. Process according to Claim 1, characterized in that the organometallic compound of a metal from groups II and III is an organoaluminium or halo-organoaluminium compound.

4. Process according to Claim 1, characterized in that the support has a particle size distribution such that the ratio Dm/Dn is between 1.1 and 2.5.

5. Process according to Claim 1, characterized in that the support has a particle size distribution such that the ratio Dm/Dn is between 1.1 and 1.5.

6. Process according to Claim 1, characterized in that the support has a particle size distribution such that more than 90% by weight of the particles are in the range Dm ± 10%.

7. Process according to Claim 1, characterized in that the support contains products comprising at least one Mg-C bond and an electron-donating compound and in that its density is between 1.6 and 2.2.

8. Process according to Claim 1, characterized in that the support has a specific surface of between 20 and 60 $m^2/g$ (BET) and, preferably, a smooth surface.

9. Process according to Claim 1, characterized in that the transition metal derivative is a titanium compound.

10. Process according to Claim 9, in which the precipitation of the titanium compound on the support has been carried out by reduction of a titanium compound, in its maximum valency, of formula $Ti(OR_7)_{4-n}X_n$, in which $R_7$ is an alkyl group containing from 2 to 6 carbon atoms, X is a chlorine or bromine atom and n is a whole or fractional number such that $1 \leq n \leq 4$, using a reducing agent chosen from organomagnesium compounds of formula $R_8MgR_9$, in which $R_8$ and $R_9$ are alkyl groups containing from 2 to 12 carbon atoms, organozinc compounds of formula $Zn(R_{10})_{(2-y)}X_y$, in which $R_{10}$ is an alkyl group having from 2 to 12 carbon atoms, X is chlorine or bromine and y a whole or fractional number such that $0 \leq y \leq 1$, and organoaluminium compounds of formula $Al(R_{11})_{(3-x)}X_x$, in which $R_{11}$ is an alkyl group having from 2 to 12 carbon atoms, X is chlorine or bromine and x is a whole or fractional number such that $0 \leq x \leq 2$,
   - it being possible for the said reduction to be carried out in the presence of an electron-donating compound chosen from organic compounds comprising at least one oxygen, sulphur, nitrogen and/or phosphorus atom,

- the relative molar amounts of the various compounds (magnesium chloride and optionally aluminium chloride support, titanium compound, organomagnesium and/or organozinc and/or organoaluminium compound and electron donor) being such that:
- support/titanium compound of between 1 and 50 and preferably of between 2.5 and 10,
- organomagnesium and/or organozinc and/or organoaluminium compound/titanium compound of between 0.1 and 3 and preferably between 0.5 and 1.5,
- electron-donating compound/titanium compound of between 0 and 5 and preferably between 0.1 and 1.5.

11. Process according to Claim 10, in which the reduction is carried out in the presence of an aliphatic ether of formula $R_{12}OR_{13}$ in which $R_{12}$ and $R_{13}$, which are identical or different, are chosen from alkyl groups having from 1 to 12 carbon atoms,
- the relative molar amounts of the various compounds (magnesium chloride and optionally aluminium chloride support, titanium compound, organomagnesium and/or organozinc and/or organoaluminium compound and ether) being such that:
- support/titanium compound of between 1 and 50 and preferably of between 2.5 and 10,
- organomagnesium and/or organozinc and/or organoaluminium compound/titanium compound of between 0.1 and 3 and preferably between 0.5 and 1.5,
- ether/titanium compound of between 0 and 5 and preferably between 0.5 and 1.5.

12. Process according to Claim 1, characterized in that the copolymerization is carried out in the presence of a catalytic system in which the atomic ratio of the amount of metal from groups II and III of the cocatalyst to the amount of transition metal from groups IV, V and VI of the catalyst is between 1 and 50.

13. Process according to Claim 1, characterized in that, before carrying out the said copolymerization, the catalyst is subjected to a prepolymerization of the ethylene or a precopolymerization of the ethylene and of an α-olefin, so as to obtain from 0.1 to 500 g of polymer or copolymer per millimole of transition metal.

14. Process according to Claim 1, characterized in that the copolymerization conditions in the fluidized bed are such that the particles of prepolymer and of copolymer which are being formed are maintained in the fluidized state solely by means of a rising gas stream containing the ethylene and the 1-hexene to be polymerized and having a velocity of between 40 and 80 cm/s.

15. Copolymers of ethylene and of 4-methyl-1-pentene in the form of a powder, which can be obtained according to the process according to Claim 1 by using 4-methyl-1-pentene as the 1-hexene and which have the following properties:
- powder composed of particles having a mass-average diameter, Dm, of between 300 and 1500 $\mu$m and a particle size distribution such that the ratio Dm/Dn is less than or equal to 3.5,
- content of units derived from 4-methyl-1-pentene of between 4 and 15% by weight,
- density of between 0.910 and 0.940,
- apparent density of between 0.35 and 0.45 g/cm$^3$,
- degree of unsaturation of less than 0.2 ethylenic double bond per 1000 carbon atoms,
- single melting point, of between 116 and 128°C, determined by differential scanning calorimetric analysis after annealing at 200°C, cooling at a rate of 16°C per minute and heating at a rate of 16°C per minute,
- structure containing a low content of long branches such that g* $\geqq$ 0.90,

$$g^* = \frac{[\eta]}{[\eta_1]}$$

[$\eta$] being the intrinsic viscosity of the copolymer and [$\eta_1$] being the intrinsic viscosity of a linear polyethylene having the same weight-average molecular mass as the copolymer.

16. Copolymers according to Claim 15, characterized in that they exist in the form of spheroidal particles having a particle size distribution such that the ratio Dm/Dn is between 1.2 and 3.

**Patentansprüche**

1. Verfahren zur Herstellung von Copolymeren von Ethylen und 1-Hexen mit einer Dichte von 0,910 bis 0,940 durch Copolymerisation von Ethylen und 1-Hexen in gasförmigem Zustand im Gemisch mit einem Inertgas, wie Stickstoff, Methan oder Ethan, und mit Wasserstoff, wobei das gasförmige Gemisch von unten nach oben durch eine Wirbelschicht des Copolymers im Verlauf seiner Bildung zirkuliert und die Copolymerisation bei einer Temperatur von 50 bis 90 °C in Gegenwart eines Katalysatorsystems durchgeführt wird, das einerseits einen Cokatalysator, der aus mindestens einer Organometallverbindung eines Metalls der Gruppen II und III des Periodensystems der Elemente besteht, und andererseits einen Katalysator umfaßt, der einen Träger, der im wesentlichen auf der Basis von Magnesiumchlorid und gegebenenfalls eines Aluminiumchlorids beruht und in Form von sphäroidalen Teilchen mit einem Massenmittel des Durchmessers von 10 bis 100 $\mu$m und in einer solchen Korngrößenverteilung vorliegt, daß das Verhältnis Dm/Dn des Massenmittels des Durchmessers, Dm, zum Zahlenmittel des Durchmessers, Dn, der Teilchen kleiner als oder gleich 3 ist, enthält, wobei auf dem Träger ein Derivat eines Übergangsmetalls der Gruppen IV, V und VI des Periodensystems der Elemente, das für seine katalytischen Eigenschaften bei der Polymerisation und Copolymerisation von $\alpha$-Olefinen bekannt ist, ausgefällt wurde, wobei die Partialdrucke (pp) der verschiedenen Bestandteile des gasförmigen Gemisches wie folgt sind:
0,05 MPa $\leq$ pp 1-Hexen $\leq$ 0,15 MPa
0,15 $\leq$ pp 1-Hexen/pp Ethylen $\leq$ 0,5
0,05 $\leq$ pp Wasserstoff/pp Ethylen $\leq$ 0,5
0,2 $\leq$ pp Inertgas/Gesamtdruck $\leq$ 0,9.

2. Verfahren nach Anspruch 1, dadurch gekennzeichnet, daß die Copolymerisation bei einer Temperatur von 70 bis 90 °C durchgeführt wird.

3. Verfahren nach Anspruch 1, dadurch gekennzeichnet, daß die Organometallverbindung des Metalls der Gruppen II und III eine Organoaluminiumverbindung oder eine Halogen-Organoaluminiumverbindung ist.

4. Verfahren nach Anspruch 1, dadurch gekennzeichnet, daß der Träger eine solche Korngrößenverteilung aufweist, daß das Verhältnis Dm/Dn 1,1 bis 2,5 beträgt.

5. Verfahren nach Anspruch 1, dadurch gekennzeichnet, daß der Träger eine solche Korngrößenverteilung aufweist, daß das Verhältnis Dm/Dn 1,1 bis 1,5 beträgt.

6. Verfahren nach Anspruch 1, dadurch gekennzeichnet, daß der Träger eine solche Korngrößenverteilung aufweist, daß mehr als 90 Gew.-% der Teilchen im Bereich von Dm $\pm$ 10 % liegen.

7. Verfahren nach Anspruch 1, dadurch gekennzeichnet, daß der Träger Verbindungen mit mindestens einer Mg-C-Bindung und eine Elektronendonorverbindung enthält und seine Dichte 1,6 bis 2,2 beträgt.

8. Verfahren nach Anspruch 1, dadurch gekennzeichnet, daß der Träger eine spezifische Oberfläche von 20 bis 60 $m^2$/g (BET) und vorzugsweise eine glatte Oberfläche aufweist.

9. Verfahren nach Anspruch 1, dadurch gekennzeichnet, daß das Derivat des Übergangsmetalls eine Titanverbindung ist.

10. Verfahren nach Anspruch 9, wobei die Ausfällung der Titanverbindung auf dem Träger durch Reduktion einer Verbindung des Titans in seiner höchsten Wertigkeit der Formel Ti$(OR_7)_{4-n}X_n$, worin $R_7$ eine Alkylgruppe mit 2-6 Kohlenstoffatomen, X ein Chlor- oder Bromatom und n eine ganze oder gebrochene Zahl mit $1 \leq n \leq 4$ bedeuten, mit einem Reduktionsmittel durchgeführt wurde, das ausgewählt wurde unter Organomagnesiumverbindungen der Formel $R_8 MgR_9$, worin $R_8$ und $R_9$ Alkylgruppen mit 2-12 Kohlenstoffatomen bedeuten, Organozinkverbindungen der Formel Zn$(R_{10})_{(2-y)}X_y$, worin $R_{10}$ eine Alkylgruppe mit 2-12 Kohlenstoffatomen, X Chlor oder Brom und y eine ganze oder gebrochene Zahl mit $0 \leq y \leq 1$ bedeuten, und Organoaluminiumverbindungen der Formel Al$(R_{11})_{(3-x)}X_x$, worin $R_{11}$ eine Alkylgruppe mit 2-12 Kohlenstoffatomen, X Chlor oder Brom und x eine ganze oder gebrochene Zahl mit $0 \leq x \leq 2$ bedeuten,
- wobei die Reduktion in Gegenwart einer Elektronendonorverbindung durchgeführt werden kann, die unter organischen Verbindungen mit mindestens einem Sauerstoff-, Schwefel-, Stickstoff- und/oder Phosphoratom ausgewählt ist, und
- wobei die relativen molaren Mengen der verschiedenen Verbindungen (Träger aus Magnesiumchlorid und gegebenenfalls Aluminiumchlorid, Titanverbindung, Organomagnesium- und/oder Organozink- und/oder Organoaluminiumverbindung, Elektronendonorverbindung) wie folgt sind:

- Träger/Titanverbindung 1 bis 50, vorzugsweise 2,5 bis 10,
- Organomagnesiumverbindung und/oder Organozinkverbindung und/oder Organoaluminiumverbindung/Titanverbindung 0,1 bis 3, vorzugsweise 0,5 bis 1,5,
- Elektronendonorverbindung/Titanverbindung 0 bis 5, vorzugsweise 0,1 bis 1,5.

11. Verfahren nach Anspruch 10, wobei die Reduktion in Gegenwart eines aliphatischen Ethers der Formel $R_{12}OR_{13}$ durchgeführt wird, worin $R_{12}$ und $R_{13}$, die gleich oder verschieden sind, unter Alkylgruppen mit 1-12-Kohlenstoffatomen ausgewählt sind,

- wobei die relativen molaren Mengen der verschiedenen Verbindungen (Träger aus Magnesiumchlorid und gegebenenfalls Aluminiumchlorid, Titanverbindung, Organomagnesiumverbindung und/oder Organozinkverbindung und/oder Organoaluminiumverbindung, Ether) wie folgt sind:
  - Träger/Titanverbindung 1 bis 50, vorzugsweise 2,5 bis 10,
  - Organomagnesiumverbindung und/oder Organozinkverbindung und/oder Organoaluminiumverbindung/Titanverbindung 0,1 bis 3, vorzugsweise 0,5 bis 1,5,
  - Ether/Titanverbindung 0 bis 5, vorzugsweise 0,5 bis 1,5.

12. Verfahren nach Anspruch 1, dadurch gekennzeichnet, daß die Copolymerisation in Gegenwart eines Katalysatorsystems durchgeführt wird, bei dem das Molverhältnis der Menge des Metalls der Gruppen II und III des Cokatalysators zur Menge des Übergangsmetalls der Gruppen IV, V und VI des Katalysators 1 bis 50 beträgt.

13. Verfahren nach Anspruch 1, dadurch gekennzeichnet, daß vor der Durchführung der Copolymerisation der Katalysator einer Prepolymerisation des Ethylens oder einer Precopolymerisation des Ethylens und eines α-Olefins derart unterworfen wird, daß 0,1 bis 500 g Polymer oder Copolymer pro Millimol Übergangsmetall erhalten werden.

14. Verfahren nach Anspruch 1, dadurch gekennzeichnet, daß die Bedingungen der Copolymerisation in der Wirbelschicht so sind, daß die Teilchen des Prepolymers und des Copolymers im Verlauf ihrer Bildung lediglich mit Hilfe eines aufsteigenden Gasstromes, der die zu polymerisierenden Verbindungen Ethylen und 1-Hexen enthält und eine Geschwindigkeit von 40 bis 80 cm/s aufweist, im fluidisierten Zustand gehalten werden.

15. Pulverförmige Copolymere von Ethylen und 4-Methyl-1-penten, erhältlich nach dem Verfahren nach Anspruch 1 unter Verwendung von 4-Methyl-1-penten als 1-Hexen, die folgende Eigenschaften aufweisen:

- Das Pulver besteht aus Teilchen mit einem Massenmittel des Durchmessers, Dm, von 300 bis 1500 µm und einer solchen Korngrößenverteilung, daß das Verhältnis Dm/Dn kleiner als oder gleich 3,5 ist;
- der Mengenanteil an von 4-Methylpenten-1 abgeleiteten Einheiten beträgt 4 bis 15 Gew.-%;
- die Dichte beträgt 0,910 bis 0,940;
- die Schüttdichte beträgt 0,35 bis 0,45 $g/cm^3$;
- der Ungesättigtkeitsgrad beträgt weniger als 0,2 ethylenische Doppelbindungen pro 1000 Kohlenstoffatome;
- der durch Differential-Scanning-Kalorimetrie (DSC) nach Erhitzen auf 200 °C, Abkühlen mit einer Geschwindigkeit von 16 °C/min und Aufheizen mit einer Geschwindigkeit von 16 °C/min bestimmte einheitliche Schmelzpunkt liegt im Bereich von 116 bis 128 °C;
- die Struktur weist einen geringen Anteil an langkettigen Verzweigungen (g*) in der Weise auf, daß

$$g^* = [\eta]/[\eta_1] \geq 0,90$$

ist, wobei [η] die Grenzviskositätszahl des Copolymers und [η_1] die Grenzviskositätszahl eines linearen Polyethylens, welches das gleiche Gewichtsmittel des Molekulargewichts wie das Copolymer aufweist, bedeuten.

16. Copolymere nach Anspruch 15, dadurch gekennzeichnet, daß sie in Form sphäroidaler Teilchen mit einer solchen Korngrößenverteilung vorliegen, daß das Verhältnis Dm/Dn 1,2 bis 3 beträgt.